# EUROPÄISCHE PATENTSCHRIFT

(11) **EP 2 759 007 B1**
(45) Veröffentlichungstag und Bekanntmachung des Hinweises auf die Patenterteilung: **28.06.2017**
(21) Anmeldenummer: 12779017.8
(22) Anmeldetag: 17.10.2012
(51) Int. Cl.: H01M 4/48, H01M 4/86, H01M 12/06, H01M 12/08, H01M 4/134, H01M 4/04

(54) **SPEICHERELEMENT FÜR EINEN FESTELEKTROLYT-ENERGIESPEICHER**
STORAGE ELEMENT FOR A SOLID ELECTROLYTE ENERGY STORE
ÉLÉMENT D'ACCUMULATION POUR UN ACCUMULATEUR D'ÉNERGIE À ÉLECTROLYTE SOLIDE

(30) Priorität: 09.11.2011 DE 102011086028
(43) Veröffentlichungstag der Anmeldung: 30.07.2014
(73) Patentinhaber: Siemens Aktiengesellschaft, 80333 München (DE)
(72) Erfinder: SCHUH, Carsten, 85598 Baldham (DE); SOLLER, Thomas, 94405 Landau/Isar (DE)
(86) Internationale Anmeldenummer: PCT/EP2012/070569
(87) Internationale Veröffentlichungsnummer: WO 2013/068218

(56) Entgegenhaltungen:
- EP-A1- 0 484 605
- CH-A- 278 111
- DE-A1-102009 057 720
- US-A1- 2006 063 051
- US-A1- 2006 204 829

## Beschreibung

Die vorliegende Erfindung betrifft ein Speicherelement für einen Festelektrolyt-Energiespeicher sowie ein Verfahren zu seiner Herstellung. Daneben betrifft die Erfindung einen Festelektrolyt-Energiespeicher.

Energiespeicher zum Speichern und Abgeben elektrischer Energie sind bspw. für viele mobile Anwendungen von hoher Bedeutung. Während die Speicherkapazität heutiger Energiespeicher zum Speichern elektrischer Energie für den Betrieb kleinerer Geräte wie Mobiltelefone, tragbare Computer, etc. ausreichend ist, sind Energiespeicher zum Speichern elektrischer Energie für größere Anwendungen wie beispielsweise elektrisch angetriebene Kraftfahrzeuge noch mit Unzulänglichkeiten behaftet, die ihrem kommerziell erfolgreichen Einsatz entgegenstehen. Insbesondere die Speicherkapazität der verwendeten Batterien erfüllt noch nicht die angestrebten Anforderungen. Obwohl beispielsweise Lithiumionenbatterien für die Anwendung etwa in Mobiltelefonen oder Computern gute Ergebnisse erzielen, eignen sie sich für Anwendungen mit hohem Energiebedarf wie bspw. elektrisch betriebene Kraftfahrzeuge nur bedingt. Die Speicherkapazität der Lithiumionenbatterien stellt dabei einen begrenzenden Faktor dar, bspw. für die Reichweite eines elektrischen Kraftfahrzeugs.

Insbesondere im Kfz-Bereich sind außerdem Systeme bekannt, bei denen die für den Antrieb notwendige Energie in Form von Wasserstoff chemisch gespeichert ist. Mittels einer Brennstoffzelle wird der Wasserstoff dann in elektrischen Strom umgewandelt, mit welchem der Motor angetrieben werden kann. Für eine derartige Technologie ist jedoch der Aufbau eines Tankstellennetzes für Wasserstoff notwendig, was die Einführung dieser Technologie insbesondere im Hinblick auf die wegen der Explosionsgefahr hohen Sicherheitsanforderungen der Tankstellen teuer macht.

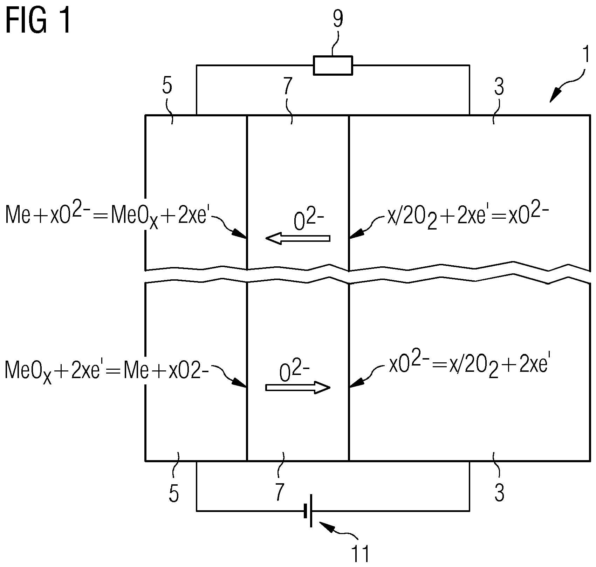

In jüngerer Zeit werden darüber hinaus auch Batterien in Betracht gezogen, in denen die elektrische Energie in Form eines reversiblen Redox-Prozesses zwischen einem Metall und Sauerstoff gespeichert wird. Der Aufbau einer derartigen Batterie entspricht in etwa einer Brennstoffzelle mit einem Festkörperelektrolyten. Sie werden daher auch als Festelektrolyt-Batterien bzw. Metall-Luft-Batterien bezeichnet. Der Elektrolyt ist zwischen zwei Elektroden angeordnet, wovon eine eine Luftelektrode ist, die aus einem Material besteht, welches den Luftsauerstoff aufspaltet und die dabei entstehenden Sauerstoffionen zum Elektrolyten leitet. Der Elektrolyt ist ebenfalls aus einem Material hergestellt, das Sauerstoffionen leiten kann. An seiner der Luftelektrode gegenüber liegenden Seite ist die zweite Elektrode angeordnet, die aus einem zu oxidierendem und zu reduzierendem Metall bzw. Metalloxid besteht. Die Batterie wird entladen, indem das Metall mittels Sauerstoffionen aus dem Luftsauerstoff oxidiert wird, und aufgeladen, indem bei Anlegen einer Spannung das Metall unter Abgabe von Sauerstoffionen reduziert wird, wobei die Sauerstoffionen dann durch den Elektrolyten zur Luftelektrode wandern, von wo aus sie als molekularer Sauerstoff an die Umgebung abgegeben werden. Dieser Vorgang ist schematisch in Figur 1 dargestellt, in der die obere Hälfte den Entladevorgang und die untere Hälfte den Ladevorgang darstellt. In dieser Figur bezeichnet die Bezugsziffer 1 die Batterie, die Bezugsziffer 3 die Luftelektrode, die Bezugsziffer 5 das Metall bzw. Metalloxid, die Bezugsziffer 7 den Elektrolyten, die Bezugsziffer 9 einen Verbraucher, der beim Entladen der Batterie mit Strom versorgt wird, und die Bezugsziffer 11 eine Stromquelle, die beim Laden der Batterie Verwendung findet. Die in den Batterien verwendeten Elektrolyte zeigen eine hoch selektive Sauerstoffionenleitung, benötigen jedoch relativ hohe Betriebstemperaturen von typischerweise 600°C oder mehr.

Neuere Entwicklungen auf dem Gebiet der Festelektrolyt-Batterien haben dazu geführt, die zweite Elektrode nicht mehr selbst als Speichermedium zu nutzen, sondern ein zusätzliches Speichermedium vorzusehen, welches aus dem Redoxpaar gebildet ist. Es ist dann ein zusätzliches, fluidisches Redoxpaar vorgesehen, das den Stofftransport zwischen der zweiten Elektrode einerseits und dem Speichermedium andererseits vermittelt. Damit kann die Leistungsdichte und die Kapazität der Festelektrolyt-Batterien gesteigert werden.
Das bisherige Design der Speicherelemente geht von einer skelettartigen Struktur mit hoher offener Porosität aus. Zur Verminderung der Sinterneigung bei den in den Festelektrolyt-Batterien herrschenden Betriebstemperaturen werden sog. ODS-Eisenpartikel (ODS: Oxide Dispersion Strengthened) verwendet. Aus dem Stand der Technik bekannte Speicherelemente gemäß dem Oberbegriff des Anspruchs 1 sind in den Dokumenten CH 278111, EP 0 484 605 A1, US 2006/0063051 A1 und US 2006/0204829 A1 offenbart.

Es ist eine Aufgabe der vorliegenden Erfindung, ein vorteilhaftes Speicherelement für einen Festelektrolyt-Energiespeicher sowie ein Verfahren zu seiner Herstellung zur Verfügung zu stellen.
Es ist eine weitere Aufgabe der vorliegenden Erfindung, einen vorteilhaften Festelektrolyt-Energiespeicher zur Verfügung zu stellen.
Die erste Aufgabe wird durch ein Speicherelement nach Anspruch 1 bzw. ein Verfahren nach Anspruch 12 oder Anspruch 13 gelöst. Die zweite Aufgabe wird durch einen Festelektrolyt-Energiespeicher nach Anspruch 8 gelöst. Die abhängigen Ansprüche enthalten vorteilhafte Ausgestaltungen der Erfindung. Ein erfindungsgemäßes Speicherelement für einen Festelektrolyt-Energiespeicher weist eine dreidimensionale Gitterstruktur aus einem Material auf, das ein Elektronen leitendes Redoxpaar umfasst. Die Gitterstruktur weist dabei Lagen aus stabförmigen Elementen auf. Innerhalb einer Lage sind die stabförmigen Elemente dann jeweils entlang einer Vorzugsrichtung ausgerichtet, wobei die Vorzugsrichtungen benachbarter Lagen sich in ihren Orientierungen voneinander unterscheiden.

Die Gitterstruktur stellt eine Alternative zur skelettartigen Struktur mit hoher offener Porosität dar. Sie ermöglicht einen raschen Zutritt des fluidischen Redoxpaares und etwaiger weiterer Prozessgase zu großen Oberflächenbereichen des Speicherelements ohne die Notwendigkeit zur Adressierung limitierender Transportprozesse wie dies bei den hochporösen skelettartigen Strukturen notwendig ist. Der rasche Zutritt zu den Oberflächenbereichen ermöglicht einen gleichmäßigen Ladungstransport mittels des fluidischen Redoxpaares zu den Oberflächenbereichen des Speicherelements hin und von den Oberflächenbereichen des Speicherelements weg. Damit kann eine gleichzeitige und gleichmäßige "Aktivierung" des Speichervolumens erreicht werden.

Wenn die Gitterstruktur die beschriebenen Lagen aus stabförmigen Elementen aufweist, können sich die Vorzugsrichtungen benachbarter Lagen jeweils um einen vorgegebenen Winkel voneinander unterscheiden. Durch eine geeignete Wahl des Winkels, um den sich die Vorzugsrichtungen benachbarter Lagen jeweils voneinander unterscheiden, können die Geschwindigkeit des Fluidflusses durch die Gitterstruktur und die Strömungspfade durch die Gitterstruktur eingestellt werden. Wenn der Winkel, um den sich benachbarte Lagen jeweils voneinander unterscheiden, ein Teiler von 180 Grad ist, bspw. ein Winkel von 90 Grad, kann eine periodische Verteilung der Orientierung benachbarter Lagen in Stapelrichtung der Lagen erreicht werden.

Das Redoxpaar des Speicherelements kann wenigstens ein Metall-Metalloxid-Paar oder ein Paar aus Metalloxiden mit unterschiedlichen Oxidationsstufen umfassen. Dabei kann das dem Redoxpaar zu Grunde liegende Metall bspw. Eisen (Fe), Nickel (Ni), Kupfer (Cu), Mangan (Mn) oder Vanadium (V) sein.

Die Gitterstruktur eines erfindungsgemäßen Speicherelements kann bspw. mittels einer Folientechnologie unter Verwendung von Platzhaltern für Hohlräume oder einer verlorenen Form hergestellt werden. Die Platzhalter können dann nach dem Erstellen eines Folienstapels bspw. durch Ausbrennen oder Ausätzen entfernt werden. Alternativ kann die Gitterstruktur unter Verwendung von Siebdruck, Schlickerguss oder Direktstrukturierungsverfahren (Rapid-Prototyping) hergestellt werden. Insbesondere unter Verwendung dieser Verfahren kann das Speicherelement in Großserien hergestellt werden. Außerdem ist eine gut reproduzierbare, flexible und kostengünstige Herstellung möglich. Zudem kann das Speicherelement mit einer Vielzahl verschiedener Redoxpaare, insbesondere einer Vielzahl auf Metall basierender Redoxpaare, hergestellt werden.

Ein erfindungsgemäßer Festelektrolyt-Energiespeicher umfasst ein erfindungsgemäßes Speicherelement. Die mit einem derartigen Festelektrolyt-Energiespeicher erzielbaren Vorteile ergeben sich unmittelbar aus den mit Bezug auf das Speicherelement beschriebenen Vorteilen.

Der erfindungsgemäße Festelektrolyt-Energiespeicher kann insbesondere umfassen:
Eine erste Elektrode, die derart angeordnet ist, dass ein Prozessfluid an ihr entlang geleitet werden kann, und die ein Material umfasst, das unter Abgabe von Elektronen an einen Bestandteil des Prozessfluids Anionen aus diesem Bestandteil erzeugen oder unter Aufnahme von Elektronen von Anionen diese durch Neutralisieren ihrer Ladung und Abgabe an das Prozessfluid verbrauchen kann.

Eine zweite Elektrode, die ein Material umfasst, das unter Abgabe von Elektronen Anionen erzeugen oder unter Aufnahme von Elektronen Anionen verbrauchen kann.

Einen zwischen der ersten Elektrode und der zweiten Elektrode angeordneten, Anionen leitenden Elektrolyten.

Ein zwischen der zweiten Elektrode einerseits und dem Speicherelement andererseits befindliches fluidisches Redoxpaar, das ein fluidisches Oxidationsedukt und ein fluidisches Oxidationsprodukt umfasst

In dem fluidischen Redoxpaar wird dann beim Entladen des Energiespeichers das fluidische Oxidationsprodukt an dem Oxidationsedukt des Speicherelements unter Erzeugung des Oxidationsprodukts des Speicherelements zu dem fluidischen Oxidationsedukt reduziert und das fluidische Oxidationsedukt an der zweiten Elektrode mittels der Anionen unter Abgabe von Elektronen an die zweite Elektrode zu dem fluidischen Oxidationsprodukt oxidiert. Beim Laden des Energiespeichers wird dagegen das fluidische Oxidationsedukt an dem Oxidationsprodukt des Speicherelements unter Erzeugung des Oxidationsedukts des Speicherelements zu dem fluidischen Oxidationsprodukt oxidiert und das fluidische Oxidationsprodukt an der zweiten Elektrode zu dem fluidischen Oxidationsedukt reduziert, wobei an der zweiten Elektrode Anionen unter Aufnahme von Elektronen aus der zweiten Elektrode generiert werden.

Das fluidische Redoxpaar kann insbesondere gasförmig sein. Ein geeignetes gasförmiges Redoxpaar ist bspw. Wasserstoff als fluidisches Oxidationsedukt und Wasserdampf als fluidisches Oxidationsprodukt.

Weitere Merkmale, Eigenschaften und Vorteile der Erfindung ergeben sich aus der nachfolgenden Beschreibung von Ausführungsbeispielen unter Bezugnahme auf die beiliegenden Figuren.
Figur 1 zeigt das Laden und Entladen eines auf der Oxidation und Reduktion eines Metalls beruhenden Energiespeichers.
Figur 2 zeigt schematisch den internen Aufbau eines erfindungsgemäßen Festelektrolyt-Energiespeichers sowie den Ladevorgang.
Figur 3 zeigt den Entladevorgang des Festelektrolyt-Energiespeichers aus Figur 2.
Figur 4 zeigt ein Ausführungsbeispiel für ein Speicherelement des Festelektrolyt-Energiespeichers.

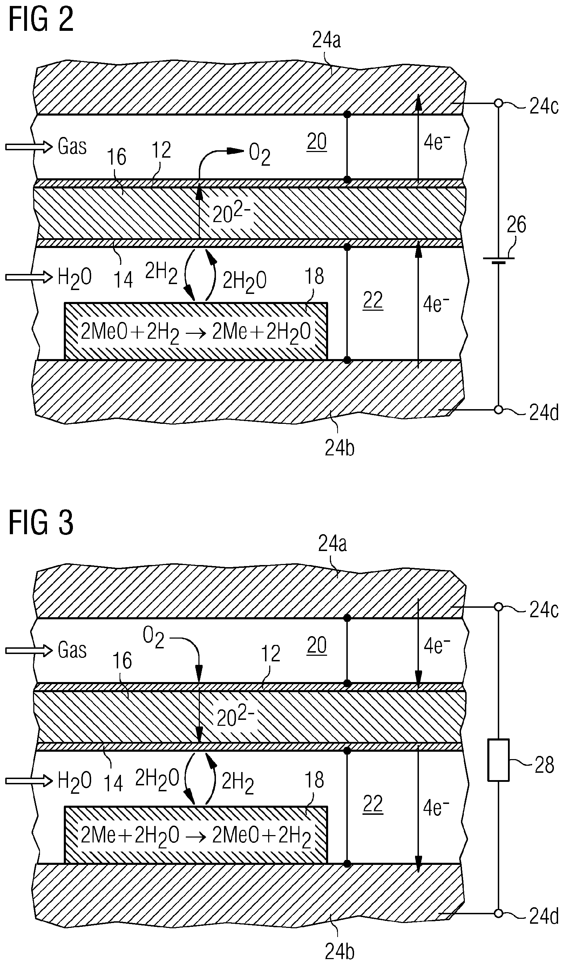

Nachfolgend werden mit Bezug auf die Figuren 2 und 3 der prinzipielle Aufbau des erfindungsgemäßen Festelektrolyt-Energiespeichers sowie der Ladevorgang und der Entladevorgang näher erläutert. Die Erläuterung erfolgt dabei am Beispiel eines Festelektrolyt-Energiespeichers, in dem sauerstoffhaltiges Prozessgas, typischerweise Luft, als Prozessfluid Verwendung findet.

Der gezeigte Festelektrolyt-Energiespeicher umfasst als Hauptkomponenten eine Luftelektrode 12, eine zweite Elektrode 14, einen zwischen den beiden Elektroden 12, 14 angeordneten Feststoffelektrolyten 16, ein Speicherelement 18 mit einem Redoxpaar, einen Prozessfluidkanal 20, der im vorliegenden Ausführungsbeispiel ein Prozessgaskanal ist, und einen Wasserstoff/Wasserdampfkanal 22. Außerdem sind Interkonnektoren 24a, 24b vorhanden, von denen einer mit den Luftelektroden 12 und einer mit den zweiten Elektroden 14 in elektrischem Kontakt steht und die gegeneinander isoliert sind.

Häufig ist eine Anzahl der beschriebenen Festelektrolyt-Energiespeicher zu einem Energiespeicherstapel, auch Zellenstapel genannt, verbunden. An den beiden Enden des Zellenstapels sind Endplatten vorhanden. Während die eine Endplatte denjenigen Interkonnektor 24a elektrisch kontaktiert, der mit der Luftelektrode 12 in Verbindung steht, kontaktiert die andere Endplatte denjenigen Interkonnektor 24b, der mit der zweite Elektrode 14 in Verbindung steht. Die Endplatten weisen außerdem elektrische Anschlüsse 24c, 24d auf, die ein Schließen des Stromkreises außerhalb des Energiespeichers ermöglichen. Außerdem können die Endplatten ebenso wie die Ränder der Interkonnektoren 24a, 24b Teil eines den Zellenstapel umgebenden Gehäuses sein.

Das Metall des Speichers 18 weist im vorliegenden Fall exemplarisch eine bivalente Wertigkeit auf. Andere Wertigkeiten sind aber grundsätzlich auch möglich. Geeignete Oxidationszustände besitzen beispielsweise Eisen (Fe) und Nickel (Ni), aber auch Kupfer (Cu), Mangan (Mn), Vanadium (V), etc. Das Metall stellt das Oxidationsedukt des Redoxpaares im Speicherelement dar, welches zur Energiespeicherung verwendet wird. Das Oxidationsprodukt ist dann das Metalloxid, bei Verwendung von Eisen bspw. Eisen(II)-oxid (FeO).

Die Luftelektrode (erste Elektrode) 12 erfüllt verschiedene Zwecke. Sie tauscht molekularen Sauerstoff mit dem Prozessgas, Elektronen mit dem Interkonnektor 24a oder der zugeordneten Endplatte und Sauerstoffionen mit dem Elektrolyten aus. Die Anforderungen an Material und Struktur sowie technische Lösungen sind aus dem Stand der Technik bezüglich Hochtemperatur-Brennstoffzellen (engl. Solid Oxide Fuel Cell, SOFC) bekannt. Ein Beispiel für ein die Anforderungen erfüllendes Material ist bspw. Lanthan-Strontium-Manganit, kurz LSM.

Auch der Feststoffelektrolyt 16 kann im vorliegenden Ausführungsbeispiel aus Scandium-stabilisiertem oder Yttriumstabilisiertem Zirkoniumoxid (ScSZ, YSZ) hergestellt sein. Es ist zudem auch möglich, dass er aus einer Kombination dieser beiden Materialien hergestellt ist. Derartige Feststoffelektrolyten zeigen eine hoch selektive Sauerstoffionenleitung, benötigen jedoch relativ hohe Betriebstemperaturen von typischerweise mindestens 600°C. Es sei an dieser Stelle darauf hingewiesen, dass bei diesen Temperaturen Eisen(II)-oxid (FeO), in dem Eisen als zweiwertiges Metall vorliegt, stabil ist.

Ähnlich wie bei der Luftelektrode 12 ergeben sich für die zweite Elektrode 14 Anforderungen an Material und Struktur sowie technische Lösungen, die aus dem Stand der Technik bezüglich Hochtemperatur-Brennstoffzellen (engl. Solid Oxide Fuel Cell, SOFC) bekannt sind. Beispiele für die Anforderungen erfüllendes Materialien sind poröses Nickel (Ni) oder Ni/YSZ-Cermet.

Der Energiespeicher beinhaltet darüber hinaus ein fluidisches Redoxpaar, dass sowohl mit dem Speicherelement 18 als auch mit der zweiten Elektrode 14 in Verbindung steht. Das fluidische Redoxpaar umfasst im vorliegenden Ausführungsbeispiel Wasserstoff als Oxidationsedukt und Wasserdampf als Oxidationsprodukt.

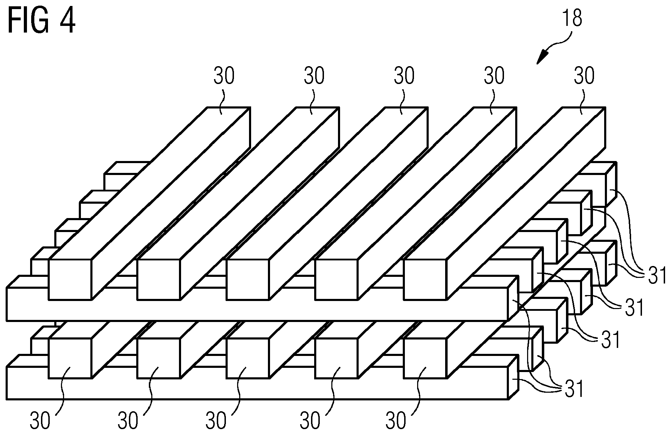

Der Aufbau des Speicherelements 18 ist in Figur 4 dargestellt. Es ist aus übereinander gestapelten Lagen von stabförmigen Redoxpaarelementen 30, 31 aufgebaut. Die stabförmigen Redoxpaarelemente 30, 31 innerhalb einer Lage sind jeweils parallel zueinander ausgerichtet. Dabei unterscheidet sich die Orientierung der Ausrichtung einer Lage von den Orientierungen der Nachbarlagen. Im vorliegenden Ausführungsbeispiel sind die Orientierungen jeweils um 90° gegeneinander verdreht, so dass die auf eine Lage folgende übernächste Lage wieder dieselbe Orientierung aufweist. Grundsätzlich können aber auch andere Verdrehungen vorliegen, beispielsweise jeweils um 60° statt um 90°, so dass jeweils erst die drittnächste Lage wieder dieselbe Orientierung wie die Ausgangslage aufweist. Auf diese Weise entsteht im Stapel eine Variation der Orientierung mit einer Periode in Stapelrichtung. Grundsätzlich ist aber auch das Stapeln ohne periodische Struktur in der Orientierung möglich.

Die Gitterstruktur des Speicherelements 18 weist eine große Oberfläche auf, wobei jeder Oberflächenbereich aufgrund der durch die Gitterzwischenräume vorhandenen Strömungspfade vom fluidischen Redoxpaar leicht erreicht werden kann. Dadurch wird eine gleichmäßige Nutzung des gesamten Speicherelements ermöglicht, d.h. dass sich beim Entladen des Energiespeichers bildende Oxid ist weitgehend gleichmäßig im Redoxpaar der Gitterstruktur verteilt. Mit der gleichmäßigen Verteilung ist auch die Bildung von Gradienten und chemischen Potentialen aufgrund von Oxidhäufungen im Speicherelement, welche wiederum zu unerwünschten Transporteffekten führen können, vermieden.

Hergestellt werden kann die in Figur 4 gezeigte Gitterstruktur beispielsweise über Folientechnologien und Einbeziehung ausbrennbarer organischer Platzhalter, welche nach der Sinterung die gewünschten Hohlraumstrukturen ergeben. Gegebenenfalls können statt ausbrennbarer Platzhalter Platzhalter Verwendung finden, die nach dem Sintern durch einen chemischen Ätzprozess entfernt werden können. Vor dem Sintern wird das Speicherelement durch Stapeln von Folien, welche die Platzhalter enthalten, aufgebaut.

Alternativ zur Folientechnologie können auch Siebdruckverfahren, Schlickergussverfahren oder Rapid-Prototyping Verfahren zur Anwendung kommen. Wenn ein Gussverfahren zur Anwendung kommt, kann dieses insbesondere ein Verfahren mit verlorener Form sein.

Mit den beschriebenen Verfahren lassen sich makroskopische Gitterstrukturen mit bis zu mehreren Millimetern Höhe und beliebiger Grundfläche aufbauen. Typische Gitterstrukturen haben eine Höhe von 1 bis 3 mm.

Die internen Abläufe beim Laden des Energiespeichers sind in Figur 2 dargestellt. Über die Interkonnektoren 24a, 24b, die Endplatten (nicht dargestellt) und die elektrischen Zu- und Ableitungen 24c, 24d wird der Energiespeicher wie in Figur 2 dargestellt an eine Gleichspannungsquelle 26 angeschlossen. Dabei wird der negative Pol der Gleichspannungsquelle 26 über den elektrischen Kontakt 24d an den mit der zweiten Elektrode 14 in Verbindung stehenden Interkonnektor 24b angelegt, der positive Pol über den elektrischen Kontakt 24c an den mit der Luftelektrode 12 in Verbindung stehenden Interkonnektor 24a. Dadurch werden der zweiten Elektrode 14 Elektronen zugeführt, welche dazu führen, dass dort eine Elektrolyse des Wasserdampfes stattfindet wobei mittels der zugeführten Elektronen Sauerstoffionen 02⁻ an der zweiten Elektrode 14 gebildet und in den Elektrolyten weitergeleitet werden. Die Sauerstoffionen werden vom Elektrolyten 14 an die Luftelektrode 12 weitergeleitet, wo aus ihnen unter Elektronenabgabe molekularer Sauerstoff gebildet wird, der an den Prozessgaskanal 20 abgegeben und durch diesen abgeführt wird. Die in der Luftelektrode 12 von den Sauerstoffionen abgegebenen Elektronen werden an die Gleichstromquelle 26 weitergegeben, so dass der Stromkreis geschlossen ist. Der im Wasserdampfkanal 22 durch die Elektrolyse entstehende Wasserstoff reduziert das Metalloxid des Speicherelements 18, wobei er wieder zu Wasserdampf oxidiert wird, welcher dann wiederum an der zweiten Elektrode 14 der Elektrolyse unterzogen werden kann. Dieser Prozess schreitet solange fort bis kein Metalloxid im Speicherelement 18 mehr vorhanden ist, bzw. nur noch so wenig Metalloxid vorhanden ist, dass keine weitere Reduktion mehr erfolgt. Danach ist der Energiespeicher vollständig aufgeladen.

Das Entladen des Energiespeichers ist in Figur 3 dargestellt. Beim Entladen ist statt der Gleichstromquelle 26 ein Verbraucher, in Figur 3 durch einen Widerstand 28 dargestellt, in den Stromkreis geschaltet. Zum Entladen wird der Luftelektrode 12 über den Prozessgaskanal 20 Luft zugeführt, wobei die Luftelektrode 12 den Luftsauerstoff dissoziiert und Sauerstoffionen 02⁻ bildet. Dabei werden der Luftelektrode 12 Elektronen entzogen, so dass sich an dieser ein positives Potential ausbildet. Durch den Elektrolyten 16 werden die Sauerstoffionen an die zweite Elektrode 14 weitergeleitet. Dort oxidieren sie Wasserstoff zu Wasserdampf, wobei Elektronen an die zweite Elektrode 14 abgegeben werden, so dass sich dort ein negatives Potential ausbildet. Der entstandene Wasserdampf oxidiert dann wiederum das Metall des Speicherelements 18 zu Metalloxid, wobei der Wasserdampf zu Wasserstoff reduziert wird, welcher an der zweiten Elektrode 14 wieder oxidiert werden kann. Über die an den Endplatten vorhanden elektrischen Kontakte 24c, 24d kann ein Verbraucher 28 angeschlossen werden. Die in der zweiten Elektrode 14 vorhandenen überschüssigen Elektronen können dann über den Interkonnektor 24b und den zugeordneten elektrischen Kontakt 24d zu dem Verbraucher fließen und von dort über den elektrischen Kontakt 24c und den mit diesem verbundenen Interkonnektor 24a zu der Luftelektrode 12. Dieser Prozess kann so lange fortgeführt werden, bis eine weitere Oxidation des Speicherelements 18 nicht mehr möglich und der Energiespeicher somit entladen ist.

Obwohl die Erfindung anhand konkreter Ausführungsbeispiele zu Illustrationszwecken beschrieben worden ist, soll die Erfindung nicht auf diese Ausführungsbeispiele eingeschränkt sein. Insbesondere sind Abweichungen von den exemplarischen Ausführungsbeispielen möglich. So kann statt des Wasserdampfes und des Wasserstoffes ein anderes fluidisches Redoxpaar vorhanden sein. Denkbar wäre beispielsweise Methan (CH₄) als Oxidationsedukt zu verwenden. Oxidationsprodukte wären dann Wasserdampf und Kohlendioxid, sodass zwei Oxidationsprodukte vorliegen. Wenn im Rahmen der vorliegenden Erfindung vom Redoxpaar die Rede ist, soll durch diesen Begriff auch der Fall umfasst sein, dass mehr als ein Oxidationsprodukt und/oder mehr als ein Oxidationsedukt im Redoxpaar vorhanden sind. Ebenso braucht das Oxidationsmittel nicht notwendiger Weise Luftsauerstoff zu sein. Auch andere Anionen bildende Gase oder Flüssigkeiten können zur Oxidation herangezogen werden. Statt zweifach negativ geladener Sauerstoffionen erfolgt die Oxidation dann anhand eines anderen einfach oder mehrfach negativ geladenen Ions, beispielsweise CO₃²⁻ oder PO₄³⁻. Zudem können auch andere Anionen bildende Elemente oder Verbindungen, etwa Fluor oder Chlor sowie Fluor- oder Chlorverbindungen, zur Oxidation herangezogen werden. Allerdings ist Luftsauerstoff als Oxidationsmittel besonders geeignet, da er überall reichlich vorhanden ist und die Umwelt nicht belastet.

## Patentansprüche

1. Speicherelement (18) für einen Festelektrolyt-Energiespeicher, welches eine dreidimensionale Gitterstruktur (30, 31) aus einem Material aufweist, das ein Elektronen leitendes Redoxpaar umfasst, **dadurch gekennzeichnet dass** die Gitterstruktur Lagen aus stabförmigen Elementen (30, 31) aufweist, die stabförmigen Elemente (30, 31) innerhalb einer Lage jeweils entlang einer Vorzugsrichtung ausgerichtet sind und die Vorzugsrichtungen benachbarter Lagen sich in ihren Orientierungen voneinander unterscheiden.

2. Speicherelement (18) nach Anspruch 1, in dem sich die Vorzugsrichtungen benachbarter Lagen jeweils um einen vorgegebenen Winkel voneinander unterscheiden.

3. Speicherelement (18) nach Anspruch 2, in dem der vorgegebene Winkel ein Teiler von 180 Grad ist.

4. Speicherelement (18) nach Anspruch 3, in dem der vorgegebene Winkel 90 Grad beträgt.

5. Speicherelement (18) nach einem der vorangehenden Ansprüche, in dem das Redoxpaar wenigstens ein Metall-Metalloxid-Paar oder ein Paar aus Metalloxiden mit unterschiedlichen Oxidationsstufen umfasst.

6. Speicherelement (18) nach Anspruch 5, in dem das dem Redoxpaar zu Grunde liegende Metall Eisen, Nickel, Kupfer, Mangan oder Vanadium ist.

7. Festelektrolyt-Energiespeicher mit einem Speicherelement (18) nach einem der vorangehenden Ansprüche.

8. Festelektrolyt-Energiespeicher nach Anspruch 7, umfassend:
- eine erste Elektrode (12), die derart angeordnet ist, dass ein Prozessfluid an ihr entlang geleitet werden kann, und die ein Material umfasst, das unter Abgabe von Elektronen an einen Bestandteil des Prozessfluids Anionen aus diesem Bestandteil erzeugen oder unter Aufnahme von Elektronen von Anionen diese durch Neutralisieren ihrer Ladung und Abgabe an das Prozessfluid verbrauchen kann;
- eine zweite Elektrode (14), die ein Material umfasst, das unter Abgabe von Elektronen Anionen erzeugen oder unter Aufnahme von Elektronen Anionen verbrauchen kann;
- einen zwischen der ersten Elektrode (12) und der zweiten Elektrode (14) angeordneten, Anionen leitenden Elektrolyten (16) ; und
- ein zwischen der zweiten Elektrode (14) einerseits und dem Speicherelement (18) andererseits befindliches fluidisches Redoxpaar, das ein fluidisches Oxidationsedukt und ein fluidisches Oxidationsprodukt umfasst und in dem
- beim Entladen des Energiespeichers das fluidische Oxidationsprodukt an dem Oxidationsedukt des Speicherelements (18) unter Erzeugung des Oxidationsprodukts des Speicherelements (18) zu dem fluidischen Oxidationsedukt reduziert und das fluidische Oxidationsedukt an der zweiten Elektrode (14) mittels der Anionen unter Abgabe von Elektronen an die zweite Elektrode (14) zu dem fluidischen Oxidationsprodukt oxidiert wird, und
- beim Laden des Energiespeichers das fluidische Oxidationsedukt an dem Oxidationsprodukt des Speicherelements (18) unter Erzeugung des Oxidationsedukts des Speicherelements (18) zu dem fluidischen Oxidationsprodukt oxidiert wird und das fluidische Oxidationsprodukt an der zweiten Elektrode (14) zu dem fluidischen Oxidationsedukt reduziert wird, wobei an der zweiten Elektrode (14) Anionen unter Aufnahme von Elektronen aus der zweiten Elektrode (14) generiert werden.

9. Festelektrolyt-Energiespeicher nach Anspruch 8, in dem das fluidische Redoxpaar gasförmig ist.

10. Festelektrolyt-Energiespeicher nach Anspruch 9, in dem das fluidische Redoxpaar Wasserstoff als fluidisches Oxidationsedukt und Wasserdampf als fluidisches Oxidationsprodukt umfasst.

11. Verfahren zum Herstellen eines Speicherelements (18) nach einem der Ansprüche 1 bis 6, in dem die Gitterstruktur (30, 31) mittels einer Folientechnologie unter Verwendung von Platzhaltern für Hohlräume hergestellt wird.

12. Verfahren zum Herstellen eines Speicherelements (18) nach einem der Ansprüche 1 bis 6, in dem die Gitterstruktur (30, 31) unter Verwendung von Siebdruck, Schlickerguss oder Direktstrukturierungsverfahren hergestellt wird.

## Claims

1. Storage element (18) for a solid electrolyte energy store, which has a three-dimensional lattice structure (30, 31) of a material that comprises an electron-conducting redox pair, **characterized in that** the lattice structure has layers of elements (30, 31) in rod form, the elements (30, 31) in rod form within a layer are respectively aligned along a preferential direction and the preferential directions of neighboring layers differ from one another in their orientations.

2. Storage element (18) according to Claim 1, in which the preferential directions of neighboring layers respectively differ from one another by a predetermined angle.

3. Storage element (18) according to Claim 2, in which the predetermined angle is a divisor of 180 degrees.

4. Storage element (18) according to Claim 3, in which the predetermined angle is 90 degrees.

5. Storage element (18) according to one of the preceding claims, in which the redox pair comprises at least one metal/metal oxide pair or a pair of metal oxides with different stages of oxidation.

6. Storage element (18) according to Claim 5, in which the metal on which the redox pair is based is iron, nickel, copper, manganese or vanadium.

7. Solid electrolyte energy store with a storage element (18) according to one of the preceding claims.

8. Solid electrolyte energy store according to Claim 7, comprising:
- a first electrode (12), which is arranged in such a way that a process fluid can be conducted along it, and which comprises a material which, while giving off electrons to a constituent of the process fluid, can generate anions from this constituent or, while taking up electrons from anions, can consume the latter by neutralizing their charge and giving it off to the process fluid;
- a second electrode (14), which comprises a material which, while giving off electrons, can generate anions or, while taking up electrons, can consume anions;
- an electrolyte (16), which is arranged between the first electrode (12) and the second electrode (14) and conducts anions; and
- a fluidic redox pair, which is located between the second electrode (14) on the one hand and the storage element (18) on the other hand and comprises a fluidic oxidation reactant and a fluidic oxidation product and in which,
- when discharging the energy store, the fluidic oxidation product is reduced to the fluidic oxidation reactant at the oxidation reactant of the storage element (18), while generating the oxidation product of the storage element (18), and the fluidic oxidation reactant is oxidized to the fluidic oxidation product at the second electrode (14) by means of the anions, while giving off electrons to the second electrode (14), and,
- when charging the energy store, the fluidic oxidation reactant is oxidized to the fluidic oxidation product at the oxidation product of the storage element (18), while generating the oxidation reactant of the storage element (18), and the fluidic oxidation product is reduced to the fluidic oxidation reactant at the second electrode (14), anions being generated at the second electrode (14), while taking up electrons from the second electrode (14).

9. Solid electrolyte energy store according to Claim 8, in which the fluidic redox pair is gaseous.

10. Solid electrolyte energy store according to Claim 9, in which the fluidic redox pair comprises hydrogen as the fluidic oxidation reactant and water vapor as the fluidic oxidation product.

11. Method for producing a storage element (18) according to one of Claims 1 to 6, in which the lattice structure (30, 31) is produced by means of a film technology, while using placeholders for cavities.

12. Method for producing a storage element (18) according to one of Claims 1 to 6, in which the lattice structure (30, 31) is produced by using screen printing, slip casting or direct structuring methods.

## Revendications

1. Élément d'accumulation (18) pour un accumulateur d'énergie à électrolyte solide, lequel possède une structure en grille tridimensionnelle (30, 31) en une matière qui comporte un couple redox conducteur d'électrons, **caractérisé en ce que** la structure en grille comprend des couches d'éléments en forme de barres (30, 31), les éléments en forme de barres (30, 31) à l'intérieur d'une couche sont chacun orientés selon une direction préférentielle, et les directions préférentielles de couches voisines se différencient l'une de l'autre par leurs orientations.

2. Élément d'accumulation (18) selon la revendication 1, dans lequel les directions préférentielles de couches voisines se différencient l'une de l'autre à chaque fois par un angle prédéfini.

3. Élément d'accumulation (18) selon la revendication 2, dans lequel l'angle prédéfini est une fraction de 180 degrés.

4. Élément d'accumulation (18) selon la revendication 3, dans lequel l'angle prédéfini est de 90 degrés.

5. Élément d'accumulation (18) selon l'une des revendications précédentes, dans lequel le couple redox comporte au moins un couple métal-oxyde métallique ou un couple d'oxydes métalliques avec des états d'oxydation différents.

6. Élément d'accumulation (18) selon la revendication 5, dans lequel le métal à la base du couple redox est le fer, le nickel, le cuivre, le manganèse ou le vanadium.

7. Accumulateur d'énergie à électrolyte solide avec un élément d'accumulation (18) selon l'une des revendications précédentes.

8. Accumulateur d'énergie à électrolyte solide selon la revendication 7, comportant :
- une première électrode (12) qui est agencée de telle sorte qu'un fluide de traitement puisse être dirigé le long de celle-ci, et qui comporte une matière qui par distribution d'électrons à un constituant du fluide de traitement peut produire des anions à partir de ce constituant ou par absorption d'électrons d'anions peut consommer ceux-ci par neutralisation de leur charge et distribution au fluide de traitement ;
- une seconde électrode (14) qui comporte une matière qui par distribution d'électrons peut produire des anions ou par absorption d'électrons peut consommer des anions ;
- un électrolyte conducteur d'anions (16) agencé entre la première électrode (12) et la seconde électrode (14) ; et
- un couple redox fluidique se trouvant entre la seconde électrode (14) d'une part et l'élément d'accumulation (18) d'autre part, qui comporte une substance de départ d'oxydation fluidique et un produit d'oxydation fluidique, et dans lequel
- par décharge de l'accumulateur d'énergie, le produit d'oxydation fluidique sur la substance de départ d'oxydation de l'élément d'accumulation (18) est réduit par production du produit d'oxydation de l'élément d'accumulation (18) en la substance de départ d'oxydation fluidique, et la substance de départ d'oxydation fluidique est oxydée en le produit d'oxydation fluidique sur la seconde électrode (14) au moyen des anions par distribution d'électrons à la seconde électrode (14), et
- par charge de l'accumulateur d'énergie, la substance de départ d'oxydation fluidique sur le produit d'oxydation de l'élément d'accumulation (18) est oxydée en le produit d'oxydation fluidique par production de la substance de départ d'oxydation de l'élément d'accumulation (18), et le produit d'oxydation fluidique sur la seconde électrode (14) est réduit en la substance de départ d'oxydation fluidique, des anions étant engendrés sur la seconde électrode (14) par absorption d'électrons à partir de la seconde électrode (14).

9. Accumulateur d'énergie à électrolyte solide selon la revendication 8, dans lequel le couple redox fluidique est gazeux.

10. Accumulateur d'énergie à électrolyte solide selon la revendication 9, dans lequel le couple redox fluidique comporte de l'hydrogène comme substance de départ d'oxydation fluidique et de la vapeur d'eau comme produit d'oxydation fluidique.

11. Procédé pour la fabrication d'un élément d'accumulation (18) selon l'une des revendications 1 à 6, dans lequel la structure en grille (30, 31) est fabriquée au moyen d'une technologie à films par utilisation de substituants pour les cavités.

12. Procédé pour la fabrication d'un élément d'accumulation (18) selon l'une des revendications 1 à 6, dans lequel la structure en grille (30, 31) est fabriquée par utilisation d'une sérigraphie, d'un coulage en barbotine ou d'un procédé de structuration directe.
